# EUROPÄISCHE PATENTSCHRIFT

(11) **EP 3 675 704 B1**
(45) Veröffentlichungstag und Bekanntmachung des Hinweises auf die Patenterteilung: **13.11.2024**
(21) Anmeldenummer: 18772886.0
(22) Anmeldetag: 24.08.2018
(51) Int. Cl.: D06F 39/00, A47L 15/42, A47L 15/00

(54) **HAUSHALTSGESCHIRRSPÜLMASCHINE MIT TANKANORDNUNG**
DOMESTIC DISHWASHER COMPRISING A TANK ASSEMBLY
LAVE-VAISSELLE MÉNAGER POURVU DE DISPOSITIF RÉSERVOIR

(30) Priorität: 01.09.2017 ES 201731059
(43) Veröffentlichungstag der Anmeldung: 08.07.2020
(73) Patentinhaber: BSH Hausgeräte GmbH, 81739 München (DE)
(72) Erfinder: ARANDIGOYEN MARTÍNEZ, Naiara, 31005 Pamplona (ES); BALERDI AZPILICUETA, Pilar, 31272 Barindano (ES); CASADO CARLINO, Sergio, 31621 Sarriguren (ES); CASTILLO BERGAD, Esther, 50018 Zaragoza (ES); ESTREMERA CARRERA, Vanesa, 31006 Pamplona (ES); MERINO ALCAIDE, Eloy, 31621 Sarriguren (ES); MOLINER MURILLO, Gustavo, 31200 Estella (Navarra) (ES); SAGÜES GARCÍA, Xabier, 31001 Pamplona (ES); URDIAIN YOLDI, Koldo, 31240 Ayegui (ES)
(86) Internationale Anmeldenummer: PCT/IB2018/056418
(87) Internationale Veröffentlichungsnummer: WO 2019/043532

(56) Entgegenhaltungen:
- EP-A1- 2 684 505
- WO-A1-2016/134938

## Beschreibung

Die Erfindung betrifft eine Haushaltsgeschirrspülmaschine mit einem Aufnahmeraum zur Aufnahme von Spülgut und mit einer Tankanordnung zur Aufnahme von Spülflüssigkeit.

Ferner wird ein Verfahren zum Betreiben einer entsprechenden Haushaltsgeschirrspülmaschine beschrieben.

Gattungsgemäße Haushaltsgeschirrspülmaschinen sind im Stand der Technik bekannt und dienen prinzipiell dem Reinigen und anschließenden Trocknen von verunreinigtem Spülgut, beispielsweise Geschirr oder Besteck. Während eines oder mehrerer Reinigungsschritte wird das Spülgut mit Spülflüssigkeit (= Wasser oder Wasser mit Reinigungs- und/oder Klarspülmittel und/oder Verunreinigungen) beaufschlagt, um Verunreinigungen vom Spülgut zu lösen. Zum Trocknen des Spülguts weisen entsprechende Haushaltsgeschirrspülmaschinen ein Trocknungssystem für das gereinigte Spülgut auf, bei dem Luft das Wasser, das an dem gereinigten Spülgut haftet, aufnimmt und das Spülgut hierdurch trocknet.

Zudem ist es bekannt, entsprechende Haushaltsgeschirrspülmaschinen mit einer Tankanordnung auszurüsten, in der Spülflüssigkeit aufgenommen werden kann (wobei auch Frischwasser im Folgenden als Spülflüssigkeit bezeichnet wird). Die Tankanordnung dient beispielsweise dem Zwischenspeichern der Spülflüssigkeit, um diese auf die Temperatur der Umgebung der Haushaltsgeschirrspülmaschine aufzuwärmen und damit Energie zu sparen. Ebenso ist es bekannt, die Tankanordnung während eines Trocknungsschritts des Spülprogramms mit kaltem Frischwasser zu füllen, um eine Kältequelle zur Verfügung zu stellen.

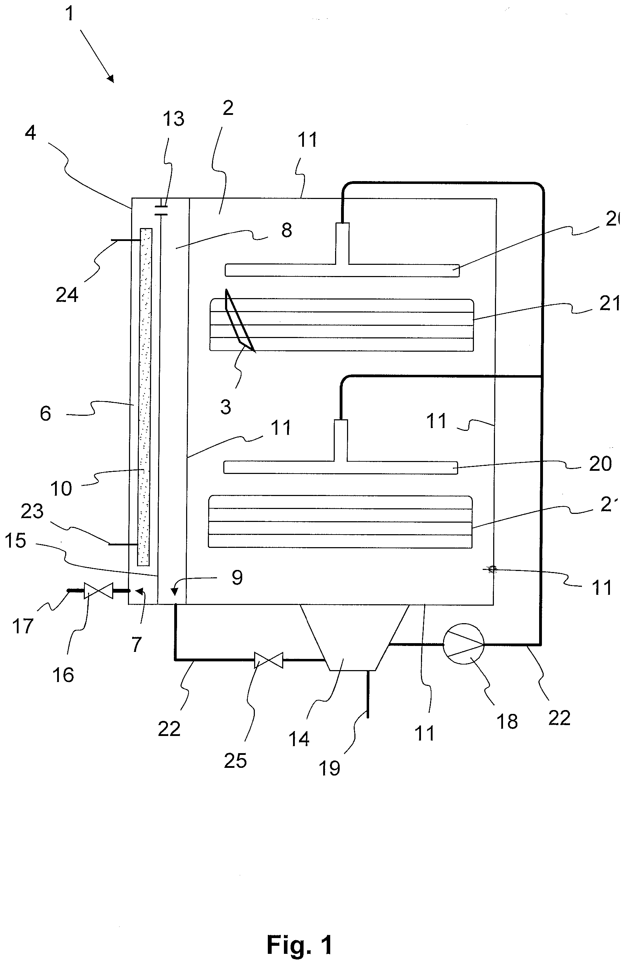

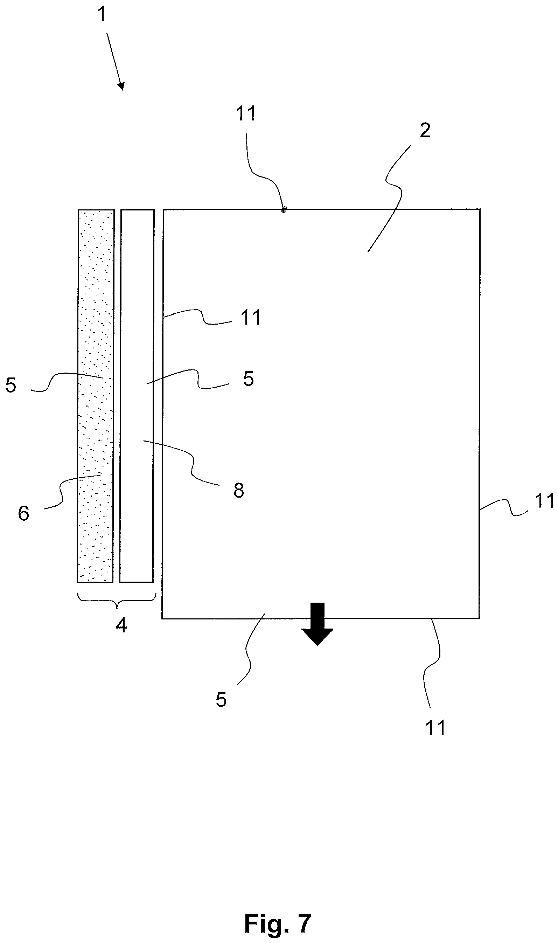

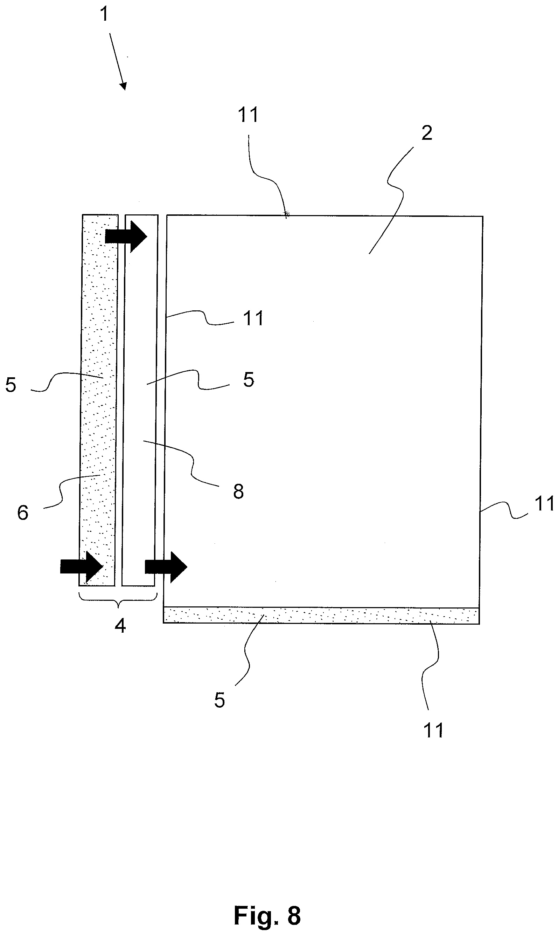

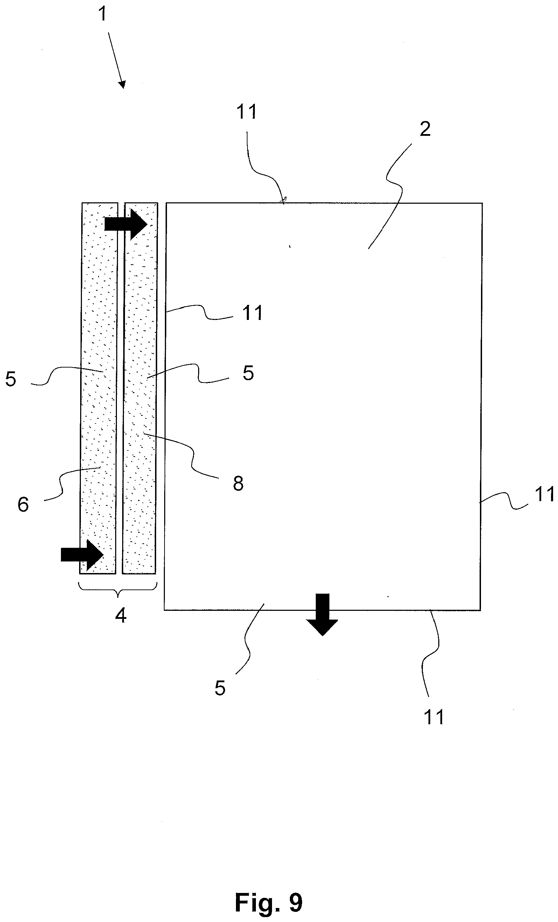

Die Haushaltsgeschirrspülmaschine der EP 2 684 505 A1 weist entsprechend den Figuren 1 - 10 insbesondere i.V.m. den Abschnitten [ 0063] - [0097] an einer Seitenwand 2b ihres Spülbehälters 2 einen flachen Speicherbehälter 5 auf, dessen Füllraum im Inneren durch eine Trennwand 17 in zwei (in Tiefenrichtung der Seitenwand betrachtet) nebeneinanderliegende Abteile 11, 16 unterteilt ist. Der Speicherbehälter 5 dient zum Zwischenspeichern von benutztem Waschwasser und/oder Klarspülwasser eines Spülgangs. Dazu ist der Pumpensumpf 4 des Spülbehälters 2 über eine Flüssigkeitsleitung 13a, 13b, 13c mit einer am Boden des Speicherbehälters 5 vorgesehenen Öffnung 6 des Speicherbehälters 5 verbunden (siehe Figur 8). In die Flüssigkeitsleitung 13a, 13b, 13 c ist eine Regenerationspumpe 8 und ein nachgeordnetes Leitungsventil 9 eingefügt. Vorzugsweise am Ende des Reinigungsgangs und/oder Klarspülgangs des Spülgangs wird jeweils die Regenerationspumpe 8 eingeschaltet und das Leitungsventil 9 geöffnet, so dass Waschwasser und/oder Klarspülwasser aus dem Pumpensumpf 4 in den Speicherbehälter 5 gepumpt wird. Zum Zwischenspeichern wird jeweils das Leitungsventil 9 geschlossen und die Regenerationspumpe 8 ausgeschaltet. Um z.B. für den Vorspülgang eines nachfolgenden Spülgangs das zwischengespeicherte Waschwasser und/oder Klarspülwasser aus dem Speicherbehälter wieder entnehmen zu können, wird bei ausgeschaltet bleibender Regenerationspumpe 8 das Leitungsventil 9 geöffnet. Dadurch läuft das zwischengespeicherte Waschwasser und/oder Klarspülwasser aus dem Speicherbehälter 5 über die Flüssigkeitsleitung 13a, 13b, 13c aufgrund seiner Schwerkraft von alleine in den gegenüber der Öffnung 6 des Speicherbehälters 5 niedriger angeordneten Pumpensumpf 4 zurück. Falls zu viel Waschwasser und/oder Klarspülwasser in die beiden Abteile 11, 16 des Speicherbehälters 5 bei dessen Befüllung mittels der Regenerationspumpe 8 hineingepumpt wird, so kann dieses über eine Überlauföffnung 12 in eine nach unten zum Boden des Speicherbehälters 5 führende Überlaufleitung 10 und aus deren Auslauföffnung 7 und über eine an dieser angeschlossenen Flüssigkeitsleitung 13d in den Pumpensumpf 4 schwerkraftbedingt ablaufen. Die Überlaufleitung 10 liegt dabei in derselben Lageebene wie die beiden Abteile 11, 16 und verläuft neben dem Abteil 11 (siehe die Figuren 7, 8). Figur 9 zeigt eine schematische Frontansicht auf den Spülbehälter 2 der Haushaltsgeschirrspülmaschine der D2, wenn ein Benutzer von vorne auf diese schaut. An der von vorne betrachtet rechten Seitenwand 2b ist der Speicherbehälter 5 angebracht. Der Überlaufkanal 10 ist vor den entlang der Tiefenerstreckung nebeneinander angeordneten Abteilen 11, 16 angeordnet.

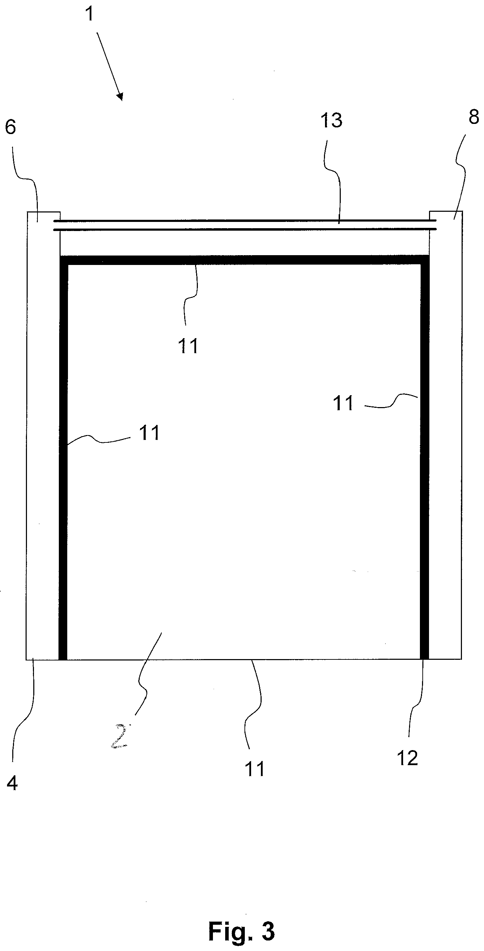

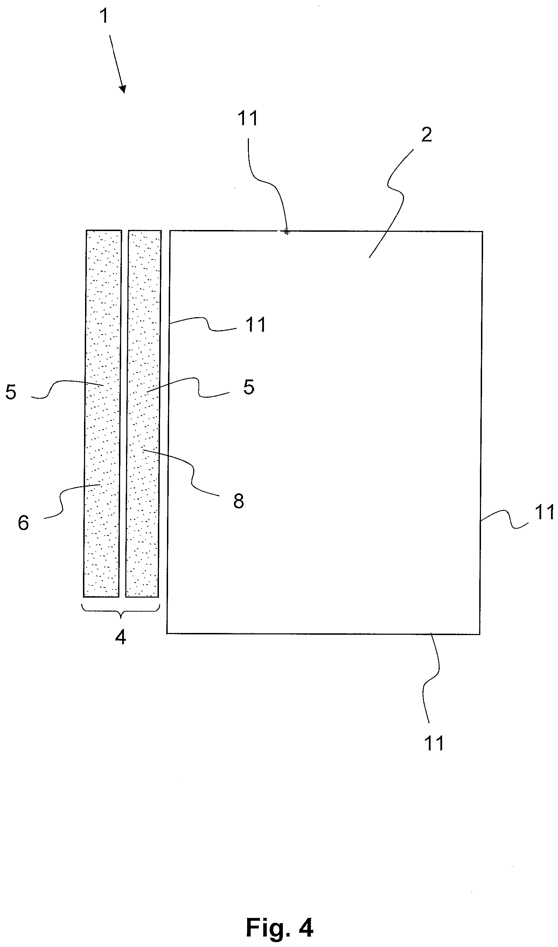

Die mit einer Wärmepumpe WP1 ausgerüstete Haushaltsgeschirrspülmaschine der WO 2016/134938 A1 weist außen an einer ersten Seitenwandung SW1 ihres Spülbehälters SB ein erstes Frischwasser- Füllreservoir WT1 (siehe Figuren, 3, 4) auf, dessen Einlass IL1 mit einer einlaufseitigen Frischwasser- Zuführeinrichtung ZLV zur Befüllung mit Frischwasser aus einem Frischwassernetz verbunden ist. Mit dem ersten Frischwasser-Füllreservoir WT1 ist der Verdampfer VD1 einer Wärmepumpe WP1 thermisch gekoppelt. Ggf. kann ein Überlauf OF1 dieses ersten Frischwasser- Füllreservoirs WT1 über eine Flüssigkeits- Verbindungsleitung VL12 mit dem Einlass IL2 eines zweiten Füllreservoirs WT2 verbunden sein, das außen auf der gegenüberliegenden, zweiten Seitenwandung SW2 des Spülbehälters angeordnet ist. Falls das zweite Frischwasser- Füllreservoir WT2 als Überlaufspeicher ausgebildet ist (siehe Figur 3), ist sein Überlaufauslass OF2 über eine Überlaufleitung WL22 mit einem Einlass WIL2 des Spülbehälters SB verbunden. Falls das zweite Frischwasser- Füllreservoir WT2 als Auslaufspeicher ausgebildet ist (siehe Figur 4), führt von seinem unteren Auslass OF2 eine Verbindungsleitung WL22* zum Einlass WIL2* des Spülbehälters SB. Am Auslass OF2 oder in der Verbindungsleitung WL22* ist dabei ein Ventil AVE vorgesehen.

Aufgabe der vorliegenden Erfindung ist es, eine gattungsgemäße Haushaltsgeschirrspülmaschine weiterzubilden und ein Verfahren zum Betreiben derselben vorzuschlagen.

Die Aufgabe wird gelöst durch eine Haushaltsgeschirrspülmaschine sowie ein Verfahren mit den Merkmalen der unabhängigen Patentansprüche.

Die Haushaltsgeschirrspülmaschine zeichnet sich dadurch aus, dass die Tankanordnung wenigstens einen ersten Tankabschnitt mit einem Zulauf umfasst, über den die Tankanordnung mit Spülflüssigkeit beschickbar ist. Bei dem Zulauf kann es sich beispielsweise um eine Öffnung, einen Anschlussstutzen für ein Rohr oder einen Schlauch oder einen Schlauch- oder Rohrabschnitt handeln, der mit der Tankanordnung verbunden ist.

In jedem Fall sollte der Zulauf strömungstechnisch mit einer Frischwasserzuleitung (die mit einem Frischwassernetz verbunden ist) und/oder mit dem Aufnahmeraum oder einem Pumpensumpf der Haushaltsgeschirrspülmaschine strömungstechnisch in Verbindung stehen. Die Tankanordnung bzw. deren erster Tankabschnitt kann also über den Zulauf mit Spülflüssigkeit beschickt werden.

Ferner ist vorgesehen, dass die Tankanordnung wenigstens einen zweiten Tankabschnitt mit einem Ablauf umfasst, über den in der Tankanordnung vorhandene Spülflüssigkeit aus der Tankanordnung austreten kann. Bei dem Ablauf kann es sich um eine Öffnung, einen Anschlussstutzen für ein Rohr oder einen Schlauch oder einen Schlauch- oder Rohrabschnitt handeln, der mit der Tankanordnung verbunden ist. Der Ablauf steht zudem strömungstechnisch mit dem Aufnahmeraum oder dem genannten Pumpensumpf in Verbindung, so dass in der Tankanordnung vorhandene Spülflüssigkeit in den Aufnahmeraum bzw. den Pumpensumpf abgelassen werden kann.

Insbesondere ist es von Vorteil, wenn in die Leitung, die zwischen dem Ablauf und dem Aufnahmeraum bzw. dem Pumpensumpf verläuft, ein Ventil integriert ist, welches mit Hilfe einer Steuer- und/oder Regelungseinheit der Haushaltsgeschirrspülmaschine zumindest zwischen einer Offenstellung und einer Schließstellung ver-bringbar ist. Vorzugsweise ist das Ventil stufenlos oder in mehreren Stufen regelbar, so dass der Volumenstrom der Spülflüssigkeit, die das Ventil passiert, angepasst werden kann (vorzugsweise in Abhängigkeit des Fortschritts eines Spülprogramms).

Der zweite Tankabschnitt kann also durch Öffnen des Ventils entleert werden, wobei es in diesem Zusammenhang von Vorteil ist, wenn die Tankanordnung, insbesondere der zweite Tankabschnitt, eine Druckausgleichsöffnung oder ein Luftventil aufweist, über die Luft in den zweiten Tankabschnitt einströmen kann, wenn dieser über den Ablauf ganz oder teilweise entleert wird.

Der erste und der zweite Tankabschnitt stellen im Übrigen jeweils einen Hohlraum dar, der von einer oder mehreren Wänden der Tankanordnung umgeben bzw. begrenzt ist. Mit anderen Worten umfasst die Tankanordnung also wenigstens zwei Hohlräume bzw. Kammern in Form der beiden genannten Tankabschnitte, die beide der Aufnahme von Spülflüssigkeit dienen. Die erfindungsgemäße Tankanordnung umfasst also ein Mehrkammertank, der zwei oder mehr Kammern aufweist.

Die Tankanordnung umfasst somit wenigstens zwei Tankabschnitte, die zudem strömungstechnisch miteinander in Verbindung stehen. Insbesondere sind beide Tankabschnitte strömungstechnisch in Reihe angeordnet. Dies bedeutet, dass Spülflüssigkeit, wenn sie vom Zulauf der Tankanordnung in den zweiten Tankabschnitt strömen soll, zwangsläufig zunächst den ersten Tankabschnitt passieren muss. Wenn also über den Zulauf Spülflüssigkeit in den ersten Tankabschnitt eingebracht wird, so wird im ersten Tankabschnitt vorhandene Spülflüssigkeit in den zweiten Tankabschnitt verdrängt. Ein Befüllen des zweiten Tankabschnitts ist also nur dadurch möglich, dass der erste Tankabschnitt soweit mit Spülflüssigkeit befüllt wird, bis diese in den zweiten Tankabschnitt übertritt. Ist der erste Tankabschnitt bis zu einem konstruktionsbedingten Maximalpegel mit Spülflüssigkeit befüllt, so wird bei weiterem Zufluss von Spülflüssigkeit in den ersten Tankabschnitt die Menge an Spülflüssigkeit in den zweiten Tankabschnitt verdrängt, die über den Zulauf in den ersten Tankabschnitt einströmt.

Der Vorteil liegt nun darin, dass beide Tankabschnitte über einen einzigen Zulauf mit Spülflüssigkeit befüllt werden können, wobei die beiden Tankabschnitte, wie nachfolgend noch ausführlicher erläutert, an unterschiedlichen Stellen der Haushaltsgeschirrspülmaschine platziert sind. Durch das Befüllen nur des ersten oder beider Tankabschnitte kann somit festgelegt werden, in welchen Bereichen der Haushaltsgeschirrspülmaschine Wärme an die sich im jeweiligen Tankabschnitt befindliche Spülflüssigkeit abgegeben wird bzw. in welchen Bereichen Wärme aus der Spülflüssigkeit entnommen wird.

Der erste Tankabschnitt wird im Übrigen dadurch befüllt, dass eine Pumpe aktiviert wird, die Spülflüssigkeit in Richtung des Zulaufs bewegt oder indem ein Ventil geöffnet wird, das sich in der Leitung befindet, die in den Zulauf mündet und die mit einer Frischwasserzuleitung oder dem Pumpensumpf oder dem Aufnahmeraum strömungstechnisch verbunden ist.

Beide Tankabschnitte sind vorzugsweise über eine Flüssigkeitsleitung in Form eines Rohrs oder eines Schlauchs miteinander verbunden.

Vorzugsweise sind die beiden Tankabschnitte im Bereich einer seitlichen Wandung angeordnet und befinden sich außerhalb des Aufnahmeraums.

Die Tankanordnung ist vorzugsweise als Zweikammertank ausgebildet. Der zweite Tankabschnitt bzw. die zweite Kammer ist erfindungsgemäß zwischen einer Wandung des Spülbehälters, insbesondere einer Seitenwandung des Spülbehälters, und dem ersten Tankabschnitt bzw. der ersten Kammer angeordnet. Der erste Tankabschnitt ist also außenliegend, während der zweite Tankabschnitt innenliegend an der Wandung des Spülbehälters angebracht ist. Der zweite Tankabschnitt kann dabei vorzugsweise direkt die Wandung kontaktieren oder auf einer etwaig an dieser außen angebrachten Auflageschicht, insbesondere Dämmschicht wie z.B. einer Bitumenmatte angeordnet sein, die den Aufnahmeraum nach außen hin gegen Geräuschabgabe/-emission dämmt.

Erfindungsgemäß umfasst die Haushaltsgeschirrspülmaschine eine Wärmepumpenanordnung, die bei ihrem Betrieb von einem Wärmeträger durchströmt wird, wobei die Wärmepumpenanordnung unter anderem einen Verdampfer umfasst, mit dessen Hilfe Wärme von der Spülflüssigkeit auf den Wärmeträger übertragbar ist.

Die Wärmepumpenanordnung umfasst prinzipiell einen als Verdampfer wirkenden Wärmetauscher zum Verdampfen eines Wärmeträgers und einen Verdichter zum Verdichten des verdampften Wärmeträgers. Mit Hilfe des Verdichters wird der in den Verdichter beim Betrieb der Wärmepumpenanordnung eintretende gasförmige Wärmeträger komprimiert, wobei er sich erwärmt.

Ferner umfasst die Wärmepumpenanordnung einen als Verflüssiger (andere Bezeichnung: Kondensor) wirkenden Wärmetauscher, in dem der erwärmte gasförmige Wärmeträger wieder kondensiert und hierbei Wärme abgibt, die beispielsweise für die Erwärmung von in der Haushaltsgeschirrspülmaschine vorhandener Spülflüssigkeit genutzt werden kann. Anschließend wird der verflüssigte Wärmeträger mit Hilfe eines Expansionsorgans (in der Regel eines Drosselventils oder eines Kapillarröhrchens) entspannt und gelangt schließlich wieder zurück zum Verdampfer, in dem er unter Wärmeaufnahme wieder in den gasförmigen Zustand übergeht, um dann erneut dem Verdichter zugeführt zu werden.

Von Vorteil ist es nun, wenn der Verdampfer zumindest abschnittsweise innerhalb des ersten Tankabschnitts angeordnet ist oder mit diesem wärmeleitend in Kontakt steht. Der Verdampfer ist beispielsweise als Röhren- oder Plattenwärmetauscher ausgebildet. Vorzugsweise ist der erste Tankabschnitt zudem derart vom Aufnahmeraum bzw. den den Aufnahmeraum begrenzenden Wandungen entfernt angeordnet, dass kein direkter Wärmeübergang vom ersten Tankabschnitt in den Aufnahmeraum stattfinden kann. Die den ersten Tankabschnitt begrenzenden Wände der Tankanordnung sind also vorzugsweise von den den Aufnahmeraum begrenzenden Wandungen beabstandet. Wird nun die Wärmepumpenanordnung betrieben, so wird der sich im ersten Tankabschnitt befindlichen Spülflüssigkeit Wärme entzogen, die vom Verdampfer aufgenommen wird. Durch die genannte Anordnung des ersten Tankabschnitts ist sichergestellt, dass keine oder nur sehr wenig Wärme vom Aufnahmeraum in den ersten Tankabschnitt übertragen wird. Der Aufnahmeraum bzw. die darin zirkulierende Spülflüssigkeit wird also nicht nennenswert abgekühlt, wenn die Wärmepumpenanordnung betrieben wird.

Erfindungsgemäß ist der zweite Tankabschnitt zumindest abschnittsweise, vorzugsweise vollständig, zwischen dem ersten Tankabschnitt und dem Aufnahmeraum angeordnet. Ist der zweite Tankabschnitt nicht mit Spülflüssigkeit befüllt, so wirkt dieser als Isolierung, da er in diesem Fall ausschließlich mit Luft gefüllt ist. Der zweite Tankabschnitt wird also vorzugsweise vor oder während Abschnitten entleert, in denen die im Aufnahmeraum zirkulierende Spülflüssigkeit aufgewärmt werden soll und in denen die Wärmepumpenanordnung betrieben wird. Durch die Isolationswirkung des leeren zweiten Tankabschnitts ist ein Abzug von Wärme aus dem Aufnahmeraum in den ersten Tankabschnitt bzw. die darin enthaltene, durch den Verdampfer gekühlte Spülflüssigkeit, nahezu ausgeschlossen, wenn der zweite Tankabschnitt leer ist.

Vorzugsweise hat der erste und/oder zweite Tankabschnitt eine quaderförmige Form. Insbesondere sollte eine senkrecht zur am nächsten liegenden und den Aufnahmeraum begrenzenden Wandung verlaufende Dicke des jeweiligen Tankabschnitts um ein Vielfaches kleiner sein als seine parallel zur genannten Wandung verlaufende Höhe bzw. Breite.

Nach einer vorteilhaften Weiterbildung liegt eine den zweiten Tankabschnitt begrenzende Wand der Tankanordnung direkt an einer dem Aufnahmeraum abgewandten Seite zumindest einer den Aufnahmeraum begrenzenden Wandung oder an einer mit der genannten Wandung in Kontakt stehenden Dämmschicht an. Ebenso ist es denkbar, dass die genannte Wandung ganz oder teilweise durch die erwähnte Wand der Tankanordnung gebildet wird. In diesem Fall kann im zweiten Tankabschnitt vorhandene Spülflüssigkeit der Kühlung des im Aufnahmeraum vorhandenen Wasserdampfs dienen. Hierdurch kann ein Trocknungsschritt eines Spülprogramms aktiv unterstützt werden, in dem eine Kondensation des genannten Wasserdampfs gewünscht ist. Insbesondere sollte der zweite Tankabschnitt während oder kurz vor einem Trocknungsschritt mit kalter Spülflüssigkeit befüllt werden.

Insbesondere ist dies dadurch möglich, dass die Wärmepumpenanordnung vor dem Trocknungsschritt, insbesondere während eines Reinigungs- und/oder Klarspülschritts, betrieben wird, wobei der zweite Tankabschnitt in diesem Zeitraum leer ist. Die sich im ersten Tankabschnitt befindliche Spülflüssigkeit wird durch die Wärmeaufnahme des Verdampfers abgekühlt. Wird nun kurz vor oder während dem Trocknungsschritts Spülflüssigkeit über den Zulauf in den ersten Tankabschnitt eingebracht, so wird die sich im ersten Tankabschnitt bereits befindliche und sehr kalte (evtl. teilweise gefrorene) Spülflüssigkeit in den zweiten Tankabschnitt verdrängt. Ist der Ablauf der Tankanordnung zu dieser Zeit geschlossen, so füllt sich der zweite Tankabschnitt allmählich bis zu einer definierten Füllhöhe mit kalter Spülflüssigkeit. Die Spülflüssigkeit im zweiten Tankabschnitt kann nun Wärme aus dem Aufnahmeraum aufnehmen und somit die Kondensation des sich dort befindlichen Wasserdampfs unterstützen bzw. bewirken.

Erfindungsgemäß sind der erste Tankabschnitt und der zweite Tankabschnitt auf derselben Seite des Aufnahmeraums (und außerhalb desselben) angeordnet. Auch ist die Anordnung beider Tankabschnitte im Bereich einer Bodenwandung denkbar. Ebenso kann nach einer nicht zur Erfindung gehörenden Ausführungsvariante der erste Tankabschnitt auf einer ersten Seite des Aufnahmeraums und der zweite Tankabschnitt auf einer zweiten Seite des Aufnahmeraums angeordnet sein.

Nach einer vorteilhaften Weiterbildung sind der erste Tankabschnitt und der zweite Tankabschnitt über eine Verbindung strömungstechnisch verbunden, wobei Spülflüssigkeit über die Verbindung vom ersten Tankabschnitt in den zweiten Tankabschnitt strömen kann. Bei der Verbindung kann es sich um ein oder mehrere Rohre und/oder Schläuche handeln.

Gemäß einer vorteilhaften Weiterbildung ist die Verbindung in vertikaler Richtung höher angeordnet als der Zulauf des ersten Tankabschnitts und/oder der Ablauf des zweiten Tankabschnitts. Vorzugsweise ist der Zulauf im unteren Drittel (in vertikaler Richtung gesehen) des ersten Tankabschnitts angeordnet, so dass der erste Tankabschnitt von unten mit Spülflüssigkeit befüllt werden kann. Auch der Ablauf des zweiten Tankabschnitts ist vorzugsweise im unteren Drittel des zweiten Tankabschnitts angeordnet, so dass der zweite Tankabschnitt durch Schwerkraft entleert wird, wenn der Strömungsweg vom Ablauf in den Aufnahmeraum bzw. den Pumpensumpf nicht durch ein Ventil versperrt ist. Schließlich ist es von Vorteil, wenn die Verbindung, über den der erste und der zweite Tankabschnitt miteinander in Verbindung stehen, oberhalb des Zulaufs und auch oberhalb des Ablaufs angeordnet ist. Vorzugsweise befindet sich die Verbindung im oberen Drittel des ersten und/oder des zweiten Tankabschnitts.

Der Strömungsweg innerhalb der Tankanordnung ist also vorzugsweise derart ausgebildet, dass die über den Zulauf einströmende Spülflüssigkeit zunächst vertikal nach oben strömt, im oberen Bereich in den zweiten Tankabschnitt verdrängt wird und dort zunächst nach unten strömen muss, bevor sie über den Ablauf aus der Tankanordnung austreten kann.

Erfindungsgemäß sind der erste Tankabschnitt und der zweite Tankabschnitt abschnittsweise durch eine gemeinsame Wand begrenzt. Beide Tankabschnitte werden also durch einen gemeinsamen Behälter gebildet, der im Inneren durch eine oder mehrere Wände in zwei Abschnitte getrennt ist, wobei die Abschnitte selbstverständlich auch in diesem Fall über eine Verbindung strömungstechnisch in Verbindung stehen. Bei der Verbindung kann es sich um eine Öffnung bzw. Durchbrechung in der genannten Wand handeln, die vorzugsweise im oberen Drittel des ersten und/oder zweiten Tankabschnitts angeordnet ist.

Generell sei an dieser Stelle darauf hingewiesen, dass die erfindungsgemäßen Tankabschnitte, von denen auch mehr als zwei vorhanden sein können, auch durch mehr als eine Verbindung strömungstechnisch in Verbindung stehen können.

Gemäß einer vorteilhaften Weiterbildung weist der erste Tankabschnitt und/oder der zweite Tankabschnitt eine Druckausgleichsöffnung auf, über die Luft in den jeweiligen Tankabschnitt einströmen kann. Wird der zweite Tankabschnitt über den Ablauf entleert, so kann Luft in den zweiten Tankabschnitt nachströmen. Die Druckausgleichsöffnung kann beispielsweise als Durchbrechung einer Wand der Tankanordnung in einem oberen Bereich des ersten oder zweiten Tankabschnitts vorliegen oder Teil eines Luftventils sein.

Das erfindungsgemäße Verfahren zum Betreiben einer Haushaltsgeschirrspülmaschine weist ein oder mehrere der vorstehend oder nachfolgend beschriebenen Merkmale auf und zeichnet sich dadurch aus, dass der zweite Tankabschnitt während definierter Abschnitte eines Spülprogramms dadurch mit Spülflüssigkeit beschickt wird, dass im ersten Tankabschnitt vorhandene Spülflüssigkeit von weiterer Spülflüssigkeit verdrängt wird, die über den Zulauf in den ersten Tankabschnitt einströmt, wobei die aus dem ersten Tankabschnitt verdrängte Spülflüssigkeit in den zweiten Tankabschnitt strömt.

In jedem Fall erfolgt das Befüllen des zweiten Tankabschnitts indirekt dadurch, dass der erste Tankabschnitt mit Spülflüssigkeit befüllt und hierbei bereits im ersten Tankabschnitt vorhandene Spülflüssigkeit verdrängt wird, die über die genannte Verbindung in den zweiten Tankabschnitt gelangt.

Das Entleeren des zweiten Tankabschnitts erfolgt hingegen direkt über den Ablauf, wobei Spülflüssigkeit, die sich einmal im zweiten Tankabschnitt befindet, nicht mehr zurück in den ersten Tankabschnitt fließt. Die Spülflüssigkeit kann jedoch nach Verlassen der Tankanordnung über den Ablauf erneut in den ersten Tankabschnitt gelangen. Dies erfolgt beispielsweise dadurch, dass die über den Ablauf in den Pumpensumpf oder den Aufnahmeraum geflossene Spülflüssigkeit erneut in den ersten Tankabschnitt gepumpt wird.

Der zweite Tankabschnitt kann also vorzugsweise ausschließlich über den ersten Tankabschnitt mit Spülflüssigkeit befüllt werden. Ferner ist der erste Tankabschnitt vorzugsweise immer mit Spülflüssigkeit gefüllt, wobei diese in den zweiten Tankabschnitt gedrängt wird, wenn über den Zulauf weitere Spülflüssigkeit in den ersten Tankabschnitt und damit in die Tankanordnung einströmt (z. B. mit Hilfe einer Pumpe oder durch Öffnen eines Ventils, das sich zwischen einem Frischwasseranschluss der Haushaltsgeschirrspülmaschine und dem Zulauf der Tankanordnung befindet).

Nach einer vorteilhaften Weiterbildung ist der zweite Tankabschnitt während ein oder mehreren Abschnitten des Spülprogramms, in denen eine Erwärmung der Spülflüssigkeit erfolgt, zumindest zeitweise nur teilweise oder überhaupt nicht mit Spülflüssigkeit befüllt. Der zweite Tankabschnitt befindet sich in diesem Fall vorzugsweise zwischen dem ersten Tankabschnitt und dem Aufnahmeraum. Ist der zweite Tankabschnitt nicht oder nur teilweise mit Spülflüssigkeit gefüllt, so wirkt er als Isolator zwischen dem ersten Tankabschnitt und dem Aufnahmeraum. Vorzugsweise wird hierbei die Spülflüssigkeit im ersten Tankabschnitt mit Hilfe eines Verdampfers einer Wärmepumpenanordnung der Haushaltsgeschirrspülmaschine abgekühlt.

Vorzugsweise ist also der erste Tankabschnitt während eines Reinigungs- oder Klarspülschritts zumindest zeitweise mit Spülflüssigkeit befüllt, während der zweite Tankabschnitt während einer oder beiden der genannten Schritte (zumindest zeitweise) gar nicht oder nur teilweise mit Spülflüssigkeit befüllt ist.

Gemäß einer vorteilhaften Weiterbildung ist der zweite Tankabschnitt während ein oder mehreren Abschnitten des Spülprogramms, in denen ein Trocknen des Spülguts erfolgt (Trocknungsschritt), zumindest zeitweise ganz oder teilweise mit Spülflüssigkeit befüllt. Die Spülflüssigkeit wird vorzugsweise während des Trocknungsschritts oder während des dem Trocknungsschritt vorangehenden Schritts des Spülprogramms vom ersten Tankabschnitt in den zweiten Tankabschnitt verdrängt. Zudem ist es sinnvoll, wenn die im ersten Tankabschnitt vorhandene Spülflüssigkeit während des Trocknungsschritts oder in dem dem Trocknungsschritt vorangehenden Schritt abgekühlt wird. Vorzugsweise erfolgt das Kühlen dadurch, dass die Haushaltsgeschirrspülmaschine eine Wärmepumpenanordnung mit einem Verdampfer umfasst, wobei die Wärmepumpenanordnung in dem Zeitraum, in dem eine Abkühlung der Spülflüssigkeit im ersten Tankabschnitt gewünscht ist, betrieben wird. Dies ist z.B. dann der Fall, wenn ein Aufheizen von Spülflüssigkeit mittels des Kondensors der Wärmepumpenanordnung des Wärmepumpenkreislaufs gewünscht ist, wie z.B. beim Reinigungsschritt und/oder Klarspülschritt, und der mit Spülflüssigkeit gefüllte erste Tankabschnitt als Wärmequelle für den Wärmepumpenkreislauf dient. Der Verdampfer ist in diesem Fall in den ersten Tankabschnitt integriert oder steht mit diesem bzw. einer oder mehreren den ersten Tankabschnitt begrenzenden Wänden in wärmeleitendem Kontakt.

Nach einer vorteilhaften Weiterbildung strömt während des Entleerens des zweiten Tankabschnitts aus dem zweiten Tankabschnitt ausströmende Spülflüssigkeit in den Aufnahmeraum oder einen Pumpensumpf der Haushaltsgeschirrspülmaschine. Die Spülflüssigkeit kann schließlich zu einem oder mehreren Sprüheinrichtungen, insbesondere rotierbaren Sprüharmen, gefördert werden, mit deren Hilfe sie auf das Spülgut gespritzt wird. Ebenso kann die Spülflüssigkeit zurück in den ersten Tankabschnitt gefördert werden.

Gemäß einer vorteilhaften Weiterbildung sind am Ende eines Spülprogramms sowohl der erste als auch der zweite Tankabschnitt mit Spülflüssigkeit befüllt. Die Spülflüssigkeit kann sich in diesem Fall auf Raumtemperatur erwärmen, bevor ein weiteres Spülprogramm gestartet wird. Zu Beginn eines neuen Spülprogramms wird schließlich zunächst der zweite Tankabschnitt in den Aufnahmeraum oder den Pumpensumpf entleert. Gleichzeitig oder nachfolgend kann über den Zulauf Frischwasser in den ersten Tankabschnitt eingebracht werden. Hierdurch wird Spülflüssigkeit aus dem ersten in den zweiten Tankabschnitt verdrängt und gelangt schließlich ebenfalls in den Aufnahmeraum oder den Pumpensumpf.

Die Erfindung und ihre vorteilhaften Aus- und Weiterbildungen sowie deren Vorteile werden nachfolgend anhand von Zeichnungen näher erläutert. Es zeigen, jeweils in einer schematischen Prinzipskizze:
- **Figur 1**: ausgewählte Abschnitte einer erfindungsgemäßen Haushaltsgeschirrspülmaschine,
- **Figur 2**: ausgewählte Abschnitte einer weiteren Ausführungsform einer erfindungsgemäßen Haushaltsgeschirrspülmaschine,
- **Figur 3**: ausgewählte Abschnitte einer weiteren Ausführungsform einer erfindungsgemäßen Haushaltsgeschirrspülmaschine, und
- **Figuren 4 bis 9**: ausgewählte Abschnitte einer weiteren Ausführungsform einer erfindungsgemäßen Haushaltsgeschirrspülmaschine während unterschiedlichen Stadien eines Spülprogramms.

Die erfindungsgemäße Haushaltsgeschirrspülmaschine 1 umfasst mehrere Wandungen 11 (in Form von Seitenwandungen, einer Rückwandung, einer Deckenwandung und einer Bodenwandung) eines Spülbehälters, die einen innenliegenden Aufnahmeraum 2 begrenzen, der wiederum der Aufnahme von Spülgut 3 dient. Ferner umfasst die Haushaltsgeschirrspülmaschine 1 eine Tür sowie ggf. ein die gezeigten Abschnitte bzw. Wandungen umgebendes Gehäuse (beides nicht dargestellt). Außen auf der jeweiligen Wandung des Spülbehälters kann insbesondere mindestens eine Dämmungsschicht wie z.B. eine Bitumenmatte zur Geräuschreduzierung, und/oder mindestens eine sonstige Auflageschicht wie z.B. eine thermische Isolationsschicht aufgebracht sein.

Zur Aufnahme des Spülguts 3 sind im Aufnahmeraum 2 beispielsweise ein oder mehrere Geschirrkörbe 21 vorhanden. Ferner ist eine Sprühanordnung mit ein oder mehreren Sprüheinrichtungen, insbesondere ein oder mehreren, vorzugsweise rotierbar gelagerten, Sprüharmen 20, vorhanden, mit deren Hilfe Spülflüssigkeit 5 (d. h. Wasser oder Wasser mit Reinigungs- und/oder Klarspülmittel und/oder Verunreinigungen versetzt) z. B. während eines Reinigungs- oder Klarspülschritts eines Spülprogramms auf das Spülgut 3 aufgebracht werden kann. Zusätzlich oder unabhängig hiervon können auch andere Sprüheinrichtungen vorgesehen sein.

Zur Versorgung mit Frischwasser ist die Haushaltsgeschirrspülmaschine 1 über eine Frischwasserzuleitung 17 mit einem nicht gezeigten Frischwassernetz verbunden, wobei in die Frischwasserzuleitung 17 ein Frischwasserventil 16 integriert ist, um den Zufluss von Frischwasser beeinflussen zu können. Ebenso ist ein Ablass 19 vorhanden, über den die Haushaltsgeschirrspülmaschine 1 mit einem nicht gezeigten Abwassernetz in Verbindung steht und über den verschmutzte Spülflüssigkeit 5 aus einem im Bereich der unteren Wandung 11 angeordneten Pumpensumpf 14 der Haushaltsgeschirrspülmaschine 1 abgeführt werden kann.

Bevor die Spülflüssigkeit 5 jedoch über den Ablauf 9 entsorgt wird, wird sie in der Regel zunächst mehrfach im Kreislauf geführt und über die Sprühanordnung auf das Spülgut 3 aufgebracht, um Verunreinigungen zu lösen. Hierfür umfasst die Haushaltsgeschirrspülmaschine 1 eine Umwälzpumpe 18, die in eine Leitung 22 integriert ist, die sich vom Pumpensumpf 14 bis zur Sprühanordnung erstreckt.

Ferner ist Figur 1 zu entnehmen, dass die Haushaltsgeschirrspülmaschine 1 eine Tankanordnung 4 umfasst, die der Aufnahme von Spülflüssigkeit 5 dient. Die Tankanordnung 4 weist einen ersten Tankabschnitt 6 und einen zweiten Tankabschnitt 8 auf, wobei die beiden Tankabschnitte 6, 8 über eine Verbindung 13 strömungstechnisch verbunden sind. Bei der Verbindung 13 kann es sich beispielsweise um ein Rohr oder einen Schlauch oder, wie gezeigt, um eine Durchbrechung innerhalb einer Wand 15 der Tankanordnung 4 handeln, die die beiden Tankabschnitte 6, 8 trennt. Die Tankanordnung 4 ist hier vorzugsweise als Zweikammertank ausgebildet. Der zweite Tankabschnitt bzw. die zweite Kammer 8 ist vorzugsweise zwischen einer Wandung des Spülbehälters, insbesondere einer Seitenwandung des Spülbehälters, und dem ersten Tankabschnitt bzw. der ersten Kammer 6 angeordnet. Der erste Tankabschnitt 6 ist also außenliegend, während der zweite Tankabschnitt 8 innenliegend an einer Wandung 11 des Spülbehälters angebracht. Der zweite Tankabschnitt 8 kann dabei vorzugsweise direkt die Wandung 11 kontaktieren oder auf einer an dieser außen angebrachten Auflageschicht, insbesondere Dämmschicht wie z.B. einer Bitumenmatte angeordnet sein, die den Aufnahmeraum 2 nach außen hin gegen Geräuschabgabe/-emission dämmt.

Die Tankanordnung 4 umfasst einen Zulauf 7, über den Frischwasser in den außenliegenden ersten Tankabschnitt 6 der Tankanordnung 4 einbringbar ist, wenn das Frischwasserventil 16 geöffnet wird. In diesem Fall strömt das Frischwasser, d.h. Spülflüssigkeit 5, im ersten Tankabschnitt 6 nach oben. Erreicht es die Verbindung 13, wird es bei weiterhin über den Zulauf 7 einströmender Spülflüssigkeit 5 über die Verbindung 13 in den zweiten Tankabschnitt 8 verdrängt. Der zweite Tankabschnitt 8 wird also nicht direkt, sondern über den ersten Tankabschnitt 6 mit Spülflüssigkeit 5 befüllt.

Im Gegenzug hierzu erfolgt die Entleerung des zweiten Tankabschnitts 8 direkt über den Ablauf 9 der Tankanordnung 4, der sich im unteren Bereich des zweiten Tank- abschnitts 8 befindet. Vorzugsweise weist die Tankanordnung 4 eine in Figur 1 nicht gezeigten Druckausgleichsöffnung 27 auf, über die Luft in den zweiten Tankabschnitt 8 nachströmen kann, wenn dieser über den Ablauf 9 entleert wird.

In jedem Fall kann der Füllstand innerhalb des zweiten Tankabschnitts 8 nun durch die Menge an Spülflüssigkeit 5 beeinflusst werden, die über den Zulauf 7 einströmt und/oder über den Ablauf 9 aus der Tankanordnung 4 ausströmt. Der Volumenstrom der über den Ablauf 9 ausströmenden Spülflüssigkeit 5 kann über ein Ablaufventil 25 geregelt werden, das sich in einer Leitung 22 zwischen dem Ablauf 9 und dem Pumpensumpf 14 befinden kann.

Besondere Vorteile hat diese Anordnung nun, wenn in den ersten Tankabschnitt 6 ein Verdampfer 10 einer Wärmepumpenanordnung der Haushaltsgeschirrspülmaschine 1 integriert ist (alternativ könnte sich dieser auch in wärmeleitendem Kontakt mit dem ersten Tankabschnitt 6 und außerhalb desselben befinden). Die übrigen Bestandteile der Wärmepumpenanordnung (wie z. B. der Verdichter, der Verflüssiger und das Expansionsorgan, die in der obigen Beschreibung bereits beschrieben wurden) sind aus Übersichtsgründen nicht gezeigt. Diese stehen jedoch mit dem Verdampfer 10 über einen Wärmeträgerzulauf 23 und einen Wärmeträgerablauf 24 strömungstechnisch in Verbindung.

Durch die Menge an Spülflüssigkeit 5 im zweiten Tankabschnitt 8 kann nun der Wärmeübergang zwischen dem Aufnahmeraum 2 und damit der darin zirkulierenden Spülflüssigkeit 5 und dem ersten Tankabschnitt 6 und damit dem Verdampfer 10 reguliert werden. Ist der zweite Tankabschnitt 8 während des Betriebs der Wärmepumpenanordnung mit Spülflüssigkeit 5 gefüllt, so kann Wärme vom Aufnahmeraum 2 über die Spülflüssigkeit 5 in den beiden Tankabschnitten 6, 8 an den Verdampfer 10 bzw. das durch den Verdampfer 10 fließende Wärmeträgermedium abgegeben werden. Ist der zweite Tankabschnitt 8 hingegen leer, so wirkt dieser als thermischer Isolator. In diesem Fall bewirkt ein Betrieb der Wärmepumpenanordnung lediglich eine Abkühlung bzw. teilweise Vereisung der im ersten Tankabschnitt 6 vorhandenen Spülflüssigkeit 5. Bei einer nur teilweisen Befüllung des zweiten Tankabschnitts 8 mit Spülflüssigkeit aus dem ersten Tankabschnitt wird die thermische Kopplung zwischen der außen mit der Tankanordnung 4 bestückten Wandung 11 und dem ersten Tankabschnitt 6 nur in dem Abschnitt des zweiten Tankabschnitts 8 erhöht, in dem die Spülflüssigkeit steht, während in dem Abschnitt des zweiten Tankabschnitts 8, der mit Luft gefüllt ist, d.h. flüssigkeitsleer bleibt, eine thermische Isolierung zwischen der Wandung 11 und dem ersten Tankabschnitt 6 nach wie vor fortbesteht.

Verallgemeinert ausgedrückt, d.h. losgelöst vom vorliegenden Ausführungsbeispiel lässt sich der Wärmeübergang bzw. Wärmetransfer zwischen dem Aufnahmeraum des Spülbehälters und dem ersten Tankabschnitt durch den Grad der Befüllung des zweiten Tankabschnitts mit der Spülflüssigkeit aus dem ersten Tankabschnitt einstellen bzw. regulieren. (Der Auslauf des zweiten Tankabschnitts ist dabei vorzugsweise geschlossen.) Falls in einer Betriebsphase der Wärmepumpenanordnung, in welcher mittels deren Kondensors bzw. Verflüssigers Spülflüssigkeit zum Einsatz im Aufnahmeraum wie z.B. beim Reinigungsschritt und/oder Klarspülschritt aufgeheizt wird, so ist es vorteilhaft, wenn der zweite Tankabschnitt vollständig leer ist, d.h. vollständig mit Luft gefüllt ist. Dann ist eine thermische Sperre bzw. Isolierung zwischen dem Aufnahmeraum des Spülbehälters und dem ersten Tankabschnitt bereitgestellt, der mit dem Verdampfer thermisch gekoppelt ist oder in dem der Verdampfer angeordnet ist. Dadurch sind Wärmeverluste aus dem Aufnahmeraum in die Spülflüssigkeit des ersten Tankabschnitts hinein während der jeweiligen Betriebsphase der Wärmepumpenanordnung, in welcher mittels deren Kondensors bzw. Verflüssigers Spülflüssigkeit zum Einsatz im Aufnahmeraum wie z.B. beim Reinigungsschritt und/oder Klarspülschritt aufgeheizt wird, weitgehend vermieden.

Für den geschirrspülprogammabschließenden Trocknungsschritt hingegen, wird der zweite Tankabschnitt mit der Spülflüssigkeit aus dem ersten Tankabschnitt vollständig gefüllt, indem eine entsprechende Menge an Frischwasser in den ersten Tankabschnitt eingelassen wird. Dieses Einlaufwasser verdrängt ja eine entsprechend große Menge an Spülflüssigkeit, die schon im ersten Tankabschnitt vorhanden war, so dass diese in den zweiten Tankabschnitt hineinläuft, insbesondere überläuft. Da die hinüberlaufende, insbesondere überlaufende Spülflüssigkeit durch den Betrieb der Wärmepumpenanordnung während eines vorausgehenden Teilspülschritts bzw. Spülabschnitts, für den erwärmende Spülflüssigkeit im Spülbehälter verteilt werden soll, durch den Verdampfer der Wärmepumpenanordnung gegenüber der ursprünglichen Wassereinlauftemperatur und/oder Umgebungstemperatur heruntergekühlt worden ist, kann die Wandung des Spülbehälters, die der zweiten Tankabschnitt kontaktiert, während des Trocknungsgangs kalt gegenüber dem Luft/Wasserdampfgemisch im Aufnahmeraum gemacht werden, was die Kondensation von Feuchtigkeit aus dem Luft-/Wasserdampfgemisch an dieser Wandung begünstigt. Dabei kann durch die Vollfüllung des zweiten Tankabschnitts mit kalter Spülflüssigkeit aus dem ersten Tankabschnitt eine thermische Wärmeleitung zum mit Spülflüssigkeit voll gefüllten ersten Tankabschnitt hergestellt werden. Dadurch steht die Gesamtmenge an kalter Spülflüssigkeit beider Tankabschnitte während des Trocknungsschritts des durchzuführenden Geschirrspülprogramms zur Kühlung der Wandung zur Verfügung.

Falls in einer Betriebsphase der Wärmepumpenanordnung, in welcher mittels deren Kondensor Spülflüssigkeit zum Einsatz im Aufnahmeraum wie z.B. beim Reinigungsschritt und/oder Klarspülschritt aufgeheizt wird, die Spülflüssigkeitsmenge im ersten Tankabschnitt unter eine vorgegebene Temperaturgrenze durch den mit ihr in wärmeleitenden Kontakt stehenden Verdampfer abgekühlt wird, so kann es vorteilhaft sein, Frischwasser aus einer Frischwasserleitung in den ersten Tankabschnitt nachzufüllen, wodurch eine Teilmenge an Spülflüssigkeit aus dem ersten Tankabschnitt in den zweiten Tankabschnitt gedrückt wird und dort für den Spülschritt mit aufzuheizender Spülflüssigkeit gespeichert ist. Dann ist der erste Tankabschnitt vorzugsweise vollständig mit Spülflüssigkeit gefüllt sowie der zweite Tankabschnitt insbesondere nur zum Teil mit Spülflüssigkeit angefüllt. Für die Spülflüssigkeit im ersten Tankabschnitt stellt sich eine Mischtemperatur ein, die höher als ihre Temperatur vor dem Nachfüllen mit Frischwasser ist. Auf diese Weise lässt sich die Gesamtmenge an Spülflüssigkeit, aus der der Verdampfer Wärmeenergie abziehen kann, vergrößern.

Einen möglichen Spülbetrieb zeigen die später noch ausführlicher beschriebenen Figuren 4 bis 9.

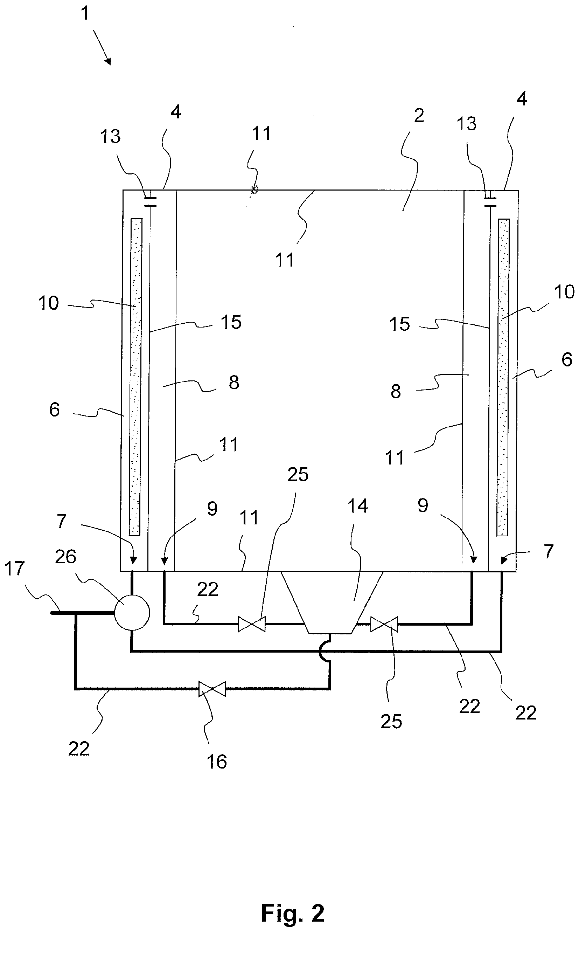

Figur 2 zeigt, dass die Haushaltsgeschirrspülmaschine 1 auch mehr als nur eine Tankanordnung 4 aufweisen kann. Denkbar ist beispielsweise, jeweils im Bereich der beiden seitlichen Wandungen 11 eine entsprechende Tankanordnung 4 anzuordnen. Um die jeweiligen ersten Tankabschnitte 6 mit Spülflüssigkeit 5 zu befüllen, ist vorzugsweise ein Mehrwegventil 26 (z. B. ein Vierwegeventil) vorgesehen, das die Frischwasserzuleitung 17 mit den beiden ersten Tankabschnitten 6 verbindet. Das Mehrwegventil 26 kann beispielsweise die Stellungen "komplett geschlossen", "komplett geöffnet" (beide ersten Tankabschnitte 6 werden mit Frischwasser befüllt) oder "teilweise geöffnet" (nur der linke oder nur der rechte erste Tankabschnitt 6 wird mit Frischwasser befüllt) aufweisen.

Ferner kann eine separate Leitung 22 vorhanden sein, die vor dem Mehrwegeventil 26 von der Frischwasserzuleitung 17 abzweigt und in den Pumpensumpf 14 mündet, um die Haushaltsgeschirrspülmaschine 1 unabhängig von der Tankanordnung 4 mit Frischwasser befüllen zu können.

Figur 3 zeigt, dass die beiden Tankabschnitte 6, 8 nicht zwingend durch eine gemeinsame Wand 15 voneinander getrennt sein müssen. Vielmehr können die beiden Tankabschnitte 6, 8 auch im Bereich unterschiedlicher Wandungen 11 angeordnet sein. Die Verbindung 13 der Tankabschnitte 6, 8 ist in diesem Fall über eine oder mehrere Rohre oder Schläuche realisiert. Zudem können eine oder beide Tankanordnungen 4 nicht direkt an einer Wandung 11, sondern an einer auf dieser außen angebrachter Dämmschicht 12 wie z.B. einer Bitumenmatte angeordnet sein, die den Aufnahmeraum 2 nach außen hin gegen Geräuschabgabe/-emission dämmt.

Schließlich ist in den Figuren 4 bis 9 eine Abfolge gezeigt, wie sie bei einem möglichen Spülprogramm verwirklicht sein könnte, wobei nur die wesentlichen Abschnitte gezeigt sind, um eine gute Übersicht zu gewährleisten.

Zu Beginn des Spülprogramms (Figur 4) sind beide Tankabschnitte 6, 8 mit Spülflüssigkeit 5 gefüllt, die am Ende des vergangenen Spülprogramms in die Tankanordnung 4 gefüllt wurde und nun in etwa Umgebungstemperatur aufweist.

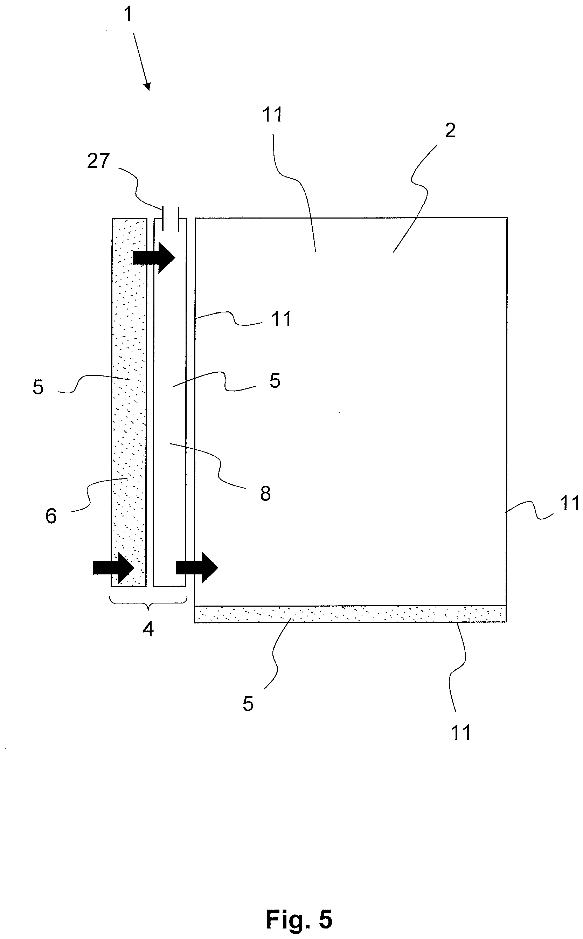

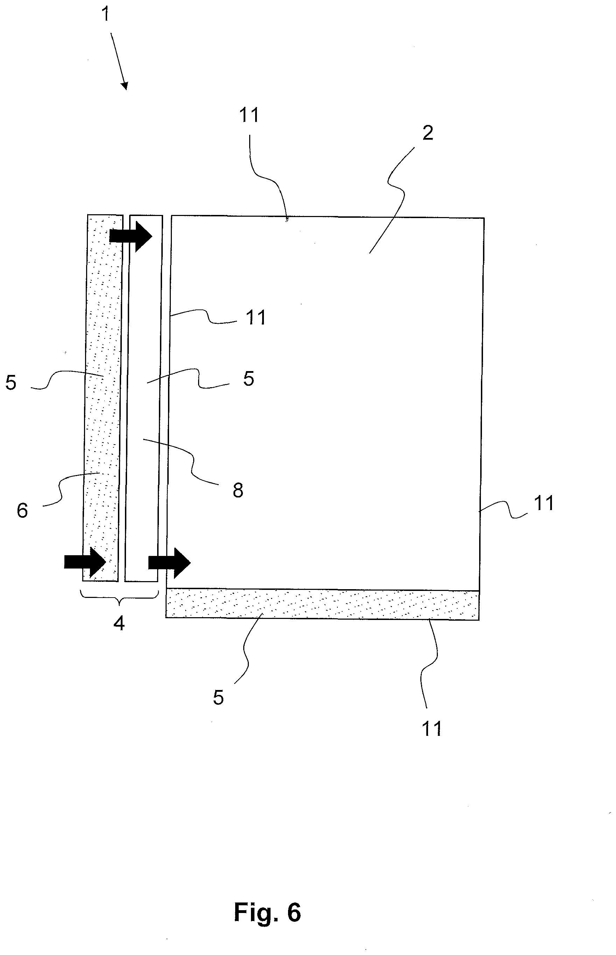

Im ersten Schritt wird die Spülflüssigkeit 5 aus dem zweiten Tankabschnitt 8 in den Aufnahmeraum 2 oder den Pumpensumpf 14 abgelassen (Figur 5). Gleichzeitig strömt Frischwasser in den ersten Tankabschnitt 6 und verdrängt hierdurch Spülflüssigkeit 5 aus dem ersten Tankabschnitt 6 in den zweiten Tankabschnitt 8, die ebenfalls in den Aufnahmeraum 2 oder den Pumpensumpf 14 strömt. Im inneren des Aufnahmeraums 2 bzw. im Pumpensumpf 14 sammelt sich hierdurch Spülflüssigkeit 5 (Figuren 5 und 6), die für den nachfolgenden Reinigungsschritt benötigt wird.

Strömende Spülflüssigkeit 5 ist in den Figuren 5 bis 9 durch dicke schwarze Pfeile gekennzeichnet. Zudem ist (ausschließlich) in Figur 5 eine Druckausgleichsöffnung 27 gezeigt, über die Luft in die Tankanordnung 4 strömen kann, wenn der zweite Tankabschnitt 8 entleert wird.

Um nun die im Pumpensumpf 14 bzw. im Aufnahmeraum 2 vorhandene Spülflüssigkeit 5 für den Reinigungsschritt zu erwärmen, wird schließlich die Wärmepumpenanordnung betrieben (Figur 6), wobei ein Wärmeübergang vom Aufnahmeraum 2 bzw. der bereits darin zirkulierenden Spülflüssigkeit 5 auf den Verdampfer 10 dadurch verhindert bzw. minimiert wird, dass der zweite Tankabschnitt 8 leer ist und damit als thermischer Isolator wirkt. Der Zufluss an Spülflüssigkeit 5 in den ersten Tankabschnitt 6 wird selbstverständlich gestoppt, wenn genügend Spülflüssigkeit 5 im Aufnahmeraum 2 bzw. im Pumpensumpf 14 vorhanden ist.

Die Spülflüssigkeit 5 im ersten Tankabschnitt 6 kühlt sich bei weiterem Betrieb der Wärmepumpenanordnung ab und kann teilweise auch vereisen. Der zweite Tankabschnitt 8 dient also als Kältereservoir bzw. der Speicherung von Kälte.

Im nächsten Schritt wird die Spülflüssigkeit 5 aus dem Aufnahmeraum 2 bzw. dem Pumpensumpf 14 abgelassen (Figur 7).

Für den nachfolgenden Klarspülschritt bedarf es jedoch erneut einer gewissen Menge an Spülflüssigkeit 5 innerhalb des Aufnahmeraums 2 bzw. des Pumpensumpfs 14. Diese Spülflüssigkeit 5 wird wiederum durch Zugabe von Frischwasser in den ersten Tankabschnitt 6 in den Aufnahmeraum 2 bzw. den Pumpensumpf 14 gefüllt, da die Zugabe ein Verdrängen von Spülflüssigkeit 5 aus dem ersten Tankabschnitt 6 in den zweiten Tankabschnitt 8 und damit ein Einströmen der Spülflüssigkeit 5 in den Aufnahmeraum 2 bzw. den Pumpensumpf 14 bewirkt. Das Ablaufventil 25 der Tankanordnung 4 ist in diesem Zeitraum geöffnet (Figur 8). Der zweite Tankabschnitt 8 bleibt während des Klarspülschritts vorzugsweise leer und wirkt dadurch als thermische Isolierung zwischen dem ersten Tankabschnitt 6 und der Wandung 11 des Spülbehälters.

Nach Abschluss des Klarspülschritts (auch hier wird die Wärmepumpenanordnung zumindest abschnittsweise betrieben), wird die Spülflüssigkeit 5 aus dem Aufnahmeraum 2 bzw. Pumpensumpf 14 abgelassen (Figur 9). Gleichzeitig wird der zweite Tankabschnitt 8 durch Zugabe von Frischwasser in den ersten Tankabschnitt 6 - vorzugsweise vollständig - gefüllt, wobei das Ablaufventil 25 in diesem Fall geschlossen ist. Der mit Spülflüssigkeit gefüllte zweite Tankabschnitt 8 wird dadurch thermisch leitend zwischen dem ersten Tankabschnitt 6 und der der Tankanordnung 4 zugewandten Wandung 11 des Spülbehälters. Da die in den zweiten Tankabschnitt 8 übertretende Spülflüssigkeit 5 durch den zuvor erfolgten und eventuell auch noch während des Trocknungsschritts erfolgenden Betrieb der Wärmepumpenanordnung sehr weit abgekühlt wurde, kommt es innerhalb des Aufnahmeraums 2 an der dem zweiten Tankabschnitt 8 benachbarten Wandung 11 zu einer Kondensation von Wasserdampf und damit zur gewünschten Trocknung der Luft im Aufnahmeraum 2. Hierdurch erfolgt schließlich auch die gewünschte Trocknung des Spülguts 3, so dass das Spülprogramm abgeschlossen werden kann.

Im Übrigen ist die Erfindung nicht auf das dargestellte Ausführungsbeispiel beschränkt. Vielmehr sind sämtliche Kombinationen der beschriebenen Einzelmerkmale, wie sie in den Ansprüchen beschrieben sind und soweit eine entsprechende Kombination technisch möglich bzw. sinnvoll erscheint, Gegenstand der Erfindung.

### Bezugszeichenliste

- 1.: Haushaltsgeschirrspülmaschine
- 2.: Aufnahmeraum
- 3.: Spülgut
- 4.: Tankanordnung
- 5.: Spülflüssigkeit
- 6.: ersten Tankabschnitt
- 7.: Zulauf
- 8.: zweiten Tankabschnitt
- 9.: Ablauf
- 10.: Verdampfer
- 11.: Wandung
- 12.: Dämmschicht
- 13.: Verbindung
- 14.: Pumpensumpf
- 15.: Wand
- 16.: Frischwasserventil
- 17.: Frischwasserzuleitung
- 18.: Umwälzpumpe
- 19.: Ablass
- 20.: Sprüharm
- 21.: Geschirrkorb
- 22.: Leitung
- 23.: Wärmeträgerzulauf
- 24.: Wärmeträgerablauf
- 25.: Ablaufventil
- 26.: Mehrwegeventil
- 27.: Druckausgleichsöffnung

## Patentansprüche

1. Haushaltsgeschirrspülmaschine (1) mit einem Aufnahmeraum (2) zur Aufnahme von Spülgut (3) und mit einer Tankanordnung (4) zur Aufnahme von Spülflüssigkeit (5), wobei die Tankanordnung (4) wenigstens einen ersten Tankabschnitt (6) mit einem Zulauf (7) umfasst, über den die Tankanordnung (4) mit Spülflüssigkeit (5) beschickbar ist, und wenigstens einenzweiten Tankabschnitt (8) mit einem Ablauf (9) umfasst, über den in der Tankanordnung (4) vorhandene Spülflüssigkeit (5) aus der Tankanordnung (4) austreten kann, wobei der erste Tankabschnitt (6) und der zweite Tankabschnitt (8) strömungstechnisch miteinander in Verbindung stehen und strömungstechnisch in Reihe angeordnet sind, so dass im ersten Tankabschnitt (6) vorhandene Spülflüssigkeit (5) in den zweiten Tankabschnitt (8) verdrängt wird, wenn über den Zulauf (7) weitere Spülflüssigkeit (5) in den ersten Tankabschnitt (6) eingebracht wird, und wobei die Haushaltsgeschirrspülmaschine (1) eine Wärmepumpenanordnung umfasst, die bei ihrem Betrieb von einem Wärmeträger durchströmt wird, wobei die Wärmepumpenanordnung unter anderem einen Verdampfer (10) umfasst, mit dessen Hilfe Wärme von der Spülflüssigkeit (5) auf den Wärmeträger übertragbar ist, wobei der Verdampfer (10) zumindest abschnittsweise innerhalb des ersten Tankabschnitts (6) angeordnet ist oder mit diesem wärmeleitend in Kontakt steht,
**dadurch gekennzeichnet,**
**dass** der erste Tankabschnitt (6) und der zweite Tankabschnitt (8) auf derselben Seite des Aufnahmeraums (2) angeordnet sind, wobei der erste Tankabschnitt (6) und der zweite Tankabschnitt (8) abschnittsweise durch eine gemeinsame Wand (15) begrenzt sind, wobei der zweite Tankabschnitt (8) zumindest abschnittsweise zwischen dem ersten Tankabschnitt (6) und dem Aufnahmeraum (2) angeordnet ist, wobei der zweite Tankabschnitt (8) zwischen einer Wandung (11), insbesondere einer Seitenwandung, des Spülbehälters der Haushaltsgeschirrspülmaschine und dem ersten Tankabschnitt (6) angeordnet ist, wobei der erste Tankabschnitt (6) außenliegend, während der zweite Tankabschnitt (8) innenliegend an der Wandung (11) des Spülbehälters angebracht ist.

2. Haushaltsgeschirrspülmaschine (1) gemäß dem vorangegangenen Anspruch, **dadurch gekennzeichnet, dass** eine den zweiten Tankabschnitt (8) begrenzende Wand (15) der Tankanordnung (4) direkt an einer dem Aufnahmeraum (2) abgewandten Seite zumindest einer den Aufnahmeraum (2) begrenzenden Wandung (11) oder an einer mit der genannten Wandung (11) in Kontakt stehenden Dämmschicht (12) anliegt oder die genannte Wandung (11) ganz oder teilweise bildet.

3. Haushaltsgeschirrspülmaschine (1) gemäß einem der vorangegangenen Ansprüche, **dadurch gekennzeichnet, dass** der erste Tankabschnitt (6) und der zweite Tankabschnitt (8) über eine Verbindung (13) strömungstechnisch verbunden sind, wobei Spülflüssigkeit (5) über die Verbindung (13) vom ersten Tankabschnitt (6) in den zweiten Tankabschnitt (8) strömen kann.

4. Haushaltsgeschirrspülmaschine (1) gemäß dem vorangegangenen Anspruch, **dadurch gekennzeichnet, dass** die Verbindung (13) in vertikaler Richtung höher angeordnet ist als der Zulauf (7) des ersten Tankabschnitts (6) und/oder der Ablauf (9) des zweiten Tankabschnitts (8).

5. Haushaltsgeschirrspülmaschine (1) gemäß einem der vorangegangenen Ansprüche, **dadurch gekennzeichnet, dass** der erste Tankabschnitt (6) und/oder der zweite Tankabschnitt (8) eine Druckausgleichsöffnung (27) aufweist, über die Luft in den jeweiligen Tankabschnitt (6; 8) einströmen kann.

6. Verfahren zum Betreiben einer Haushaltsgeschirrspülmaschine (1) gemäß einem der vorherigen Ansprüche, **dadurch gekennzeichnet, dass** der zweite Tankabschnitt (8) während definierter Abschnitte eines Spülprogramms dadurch mit Spülflüssigkeit (5) beschickt wird, dass im ersten Tankabschnitt (6) vorhandene Spülflüssigkeit (5) von weiterer Spülflüssigkeit (5) verdrängt wird, die über den Zulauf (7) in den ersten Tankabschnitt (6) einströmt, wobei die aus dem ersten Tankabschnitt (6) verdrängte Spülflüssigkeit (5) in den zweiten Tankabschnitt (8) strömt.

7. Verfahren gemäß dem vorangegangenen Anspruch, **dadurch gekennzeichnet, dass** der zweite Tankabschnitt (8) während ein oder mehreren Abschnitten des Spülprogramms, in denen eine Erwärmung der Spülflüssigkeit (5) erfolgt, zumindest zeitweise nur teilweise oder überhaupt nicht mit Spülflüssigkeit (5) befüllt ist.

8. Verfahren gemäß Anspruch 6 oder 7, **dadurch gekennzeichnet, dass** der zweite Tankabschnitt (8) während ein oder mehreren Abschnitten des Spülprogramms, in denen ein Trocknen des Spülguts (3) erfolgt, zumindest zeitweise vollständig oder teilweise mit Spülflüssigkeit (5) befüllt ist.

9. Verfahren gemäß einem der Ansprüche 6 bis 8, **dadurch gekennzeichnet, dass** während des Entleerens des zweiten Tankabschnitts (8) aus dem zweiten Tankabschnitt (8) ausströmende Spülflüssigkeit (5) in den Aufnahmeraum (2) oder einen Pumpensumpf (14) der Haushaltsgeschirrspülmaschine (1) strömt.

10. Verfahren gemäß einem der Ansprüche 6 bis 9, **dadurch gekennzeichnet, dass** am Ende eines Spülprogramms sowohl der erste als auch der zweite Tankabschnitt (8) mit Spülflüssigkeit (5) befüllt sind.

## Claims

1. Household dishwasher (1) comprising a receiving area (2) for receiving items to be washed (3) and comprising a tank assembly (4) for receiving dishwashing fluid (5), wherein the tank assembly (4) comprises at least one first tank section (6) with an inlet (7), via which the tank assembly (4) can be supplied with dishwashing fluid (5), and at least one second tank section (8) with an outlet (9), via which dishwashing fluid (5) present in the tank assembly (4) can exit the tank assembly (4), wherein the first tank section (6) and the second tank section (8) are fluidically connected together and are arranged fluidically in series such that dishwashing fluid (5) present in the first tank section (6) is displaced into the second tank section (8) when additional dishwashing fluid (5) is introduced into the first tank section (6) via the inlet (7), and wherein the household dishwasher (1) comprises a heat pump arrangement, a heat transfer medium flowing therethrough during the operation thereof, wherein the heat pump arrangement comprises, amongst other things, an evaporator (10), heat being able to be transferred thereby from the dishwashing fluid (5) to the heat transfer medium, wherein the evaporator (10) is at least partially arranged inside the first tank section (6) or is in thermally conductive contact therewith
**characterised in that**
the first tank section (6) and the second tank section (8) are arranged on the same side of the receiving area (2), wherein the first tank section (6) and the second tank section (8) are partially defined by a common wall (15), wherein the second tank section (8) is at least partially arranged between the first tank section (6) and the receiving area (2), wherein the second tank section (8) is arranged between a wall (11), in particular a side wall of the washing container of the household dishwasher and the first tank section, wherein the first tank section is attached externally to the wall (11) of the washing container, whilst the second tank section (8) is attached internally to the wall (11) of the washing container.

2. Household dishwasher (1) according to one of the preceding claims, **characterised in that** a wall (15) of the tank assembly (4) defining the second tank section (8) bears directly against a side, remote from the receiving area (2), of at least one wall (11) defining the receiving area (2) or against a damping layer (12) in contact with the aforementioned wall (11) or entirely or partially forms the aforementioned wall (11).

3. Household dishwasher (1) according to one of the preceding claims, **characterised in that** the first tank section (6) and the second tank section (8) are fluidically connected together via a connection (13), wherein dishwashing fluid (5) may flow via the connection (13) from the first tank section (6) into the second tank section (8).

4. Household dishwasher (1) according to the preceding claim, **characterised in that** the connection (13) is arranged higher in the vertical direction than the inlet (7) of the first tank section (6) and/or the outlet (9) of the second tank section (8).

5. Household dishwasher (1) according to one of the preceding claims, **characterised in that** the first tank section (6) and/or the second tank section (8) has a pressure compensation opening (27) via which air may flow into the respective tank section (6; 8).

6. Method for operating a household dishwasher (1) according to one of the preceding claims, **characterised in that** the second tank section (8) is supplied with dishwashing fluid (5) during defined stages of a washing program, by dishwashing fluid (5) present in the first tank section (6) being displaced by further dishwashing fluid (5) which flows via the inlet (7) into the first tank section (6), wherein the dishwashing fluid (5) displaced from the first tank section (6) flows into the second tank section (8).

7. Method according to the preceding claim, **characterised in that** during one or more stages of the washing program, in which the dishwashing fluid (5) is heated, the second tank section (8) is at least temporarily only partially filled or not filled with dishwashing fluid (5).

8. Method according to claim 6 or 7, **characterised in that** during one or more stages of the washing program, in which the items to be washed (3) are dried, the second tank section (8) is at least temporarily entirely or partially filled with dishwashing fluid (5).

9. Method according to one of claims 6 to 8, **characterised in that** during the emptying of the second tank section (8), dishwashing fluid (5) flowing out of the second tank section (8) flows into the receiving area (2) or a pump sump (14) of the household dishwasher (1).

10. Method according to one of claims 6 to 9, **characterised in that** at the end of a washing program both the first and the second tank section (8) are filled with dishwashing fluid (5).

## Revendications

1. Lave-vaisselle ménager (1) comprenant un espace de réception (2) destiné à recevoir des articles à laver (3) et un dispositif de réservoir (4) destiné à recevoir un liquide de lavage (5),
dans lequel le dispositif de réservoir (4) comprend au moins une première section de réservoir (6) comportant une entrée (7), par laquelle le dispositif de réservoir (4) peut être alimenté en liquide de lavage (5), et au moins une deuxième section de réservoir (8) dotée d'une sortie (9), par laquelle le liquide de lavage (5) présent dans le dispositif de réservoir (4) peut sortir du dispositif de réservoir (4),
dans lequel la première section de réservoir (6) et la deuxième section de réservoir (8) sont en communication l'une avec l'autre par une technique fluidique et sont disposés fluidiquement en série, de sorte que le liquide de lavage (5) présent dans la première section de réservoir (6) est chassé dans la deuxième section de réservoir (8) lorsque du liquide de lavage supplémentaire (5) est introduit dans la première section de réservoir (6) par l'entrée (7), et
dans lequel le lave-vaisselle ménager (1) comprend un dispositif de pompe à chaleur, qui, lors de son fonctionnement, est parcouru par un agent caloporteur,
dans lequel le dispositif de pompe à chaleur comprend entre autres choses un évaporateur (10), à l'aide duquel de la chaleur peut être transmise du liquide de lavage (5) à l'agent caloporteur,
dans lequel l'évaporateur (10) est disposé au moins par sections à l'intérieur de la première section de réservoir (6) ou est en contact thermiquement conducteur avec cette dernière,
**caractérisé en ce que**
la première section de réservoir (6) et la deuxième section de réservoir (8) sont disposées sur le même côté de l'espace de réception (2),
dans lequel la première section de réservoir (6) et la deuxième section de réservoir (8) sont délimitées par sections par une paroi commune (15),
la deuxième section de réservoir (8) est disposée au moins par sections entre la première section de réservoir (6) et l'espace de réception (2),
la deuxième section de réservoir (8) est disposée entre une paroi (11), en particulier une paroi latérale de la cuve de lavage du lave-vaisselle ménager et la première section de réservoir (6), et
la première section de réservoir (6) est montée à l'extérieur contre la paroi (11) de la cuve de lavage, tandis que la deuxième section de réservoir (8) est montée à l'intérieur contre celle-ci.

2. Lave-vaisselle ménager (1) selon la revendication précédente, **caractérisé en ce qu'**une paroi (15) du dispositif de réservoir (4) délimitant la deuxième section de réservoir (8) s'applique directement sur un côté opposé à l'espace de réception (2) d'au moins une paroi (11) délimitant l'espace de réception (2) ou sur une couche isolante (12) en contact avec ladite paroi (11) ou forme entièrement ou en partie ladite paroi (11).

3. Lave-vaisselle ménager (1) selon l'une des revendications précédentes, **caractérisé en ce que** la première section de réservoir (6) et la deuxième section de réservoir (8) sont raccordées, par une technique de fluide, par un raccordement (13), dans lequel le liquide de lavage (5) peut s'écouler par l'intermédiaire du raccordement (13) de la première section de réservoir (6) dans la deuxième section de réservoir (8).

4. Lave-vaisselle ménager (1) selon la revendication précédente, **caractérisé en ce que** le raccordement (13) est disposé plus haut dans le sens vertical que l'entrée (7) de la première section de réservoir (6) et/ou la sortie (9) de la deuxième section de réservoir (8).

5. Lave-vaisselle ménager (1) selon l'une des revendications précédentes, **caractérisé en ce que** la première section de réservoir (6) et/ou la deuxième section de réservoir (8) comprend un orifice d'équilibrage de pression (27), par lequel l'air peut affluer dans la section de réservoir respective (6, 8).

6. Procédé de fonctionnement d'un lave-vaisselle ménager (1) selon l'une des revendications précédentes, **caractérisé en ce que** la deuxième section de réservoir (8) est alimentée avec du liquide de lavage (5) pendant des sections définies d'un programme de lavage, par le fait que le liquide de lavage (5) présent dans la première section de réservoir (6) est chassé par un liquide de lavage supplémentaire (5) qui afflue par l'entrée (7) dans la première section de réservoir (6), dans lequel le liquide de lavage chassé à partir de la première section de réservoir (6) s'écoule dans la deuxième section de réservoir (8).

7. Procédé selon la revendication précédente, **caractérisé en ce que** la deuxième section de réservoir (8) est remplie au moins temporairement uniquement en partie ou pas du tout avec du liquide de lavage (5) pendant une ou plusieurs sections du programme de lavage dans lesquelles un chauffage du liquide de lavage (5) est effectué.

8. Procédé selon la revendication 6 ou 7, **caractérisé en ce que** la deuxième section de réservoir (8) est remplie au moins temporairement entièrement ou en partie avec du liquide de lavage (5) pendant une ou plusieurs sections du programme de lavage dans lesquelles un séchage des articles à laver (3) est effectué.

9. Procédé selon l'une des revendications 6 à 8, **caractérisé en ce que**, pendant le vidage de la deuxième section de réservoir (8) le liquide de lavage (5) s'écoulant hors de la deuxième section de réservoir (8) s'écoule dans l'espace de réception (2) ou dans un puisard (14) du lave-vaisselle ménager (1).

10. Procédé selon l'une des revendications 6 à 9, **caractérisé en ce qu'**à la fin d'un programme de lavage, la première ainsi que la deuxième section de réservoir (8) sont remplies avec du liquide de lavage (5).
